# EUROPEAN PATENT SPECIFICATION

(11) **EP 3 078 122 B1**
(45) Date of publication and mention of the grant of the patent: **15.04.2020**
(21) Application number: 15772186.1
(22) Date of filing: 31.03.2015
(51) Int. Cl.: H04B 7/02, H04J 11/00, H04B 1/707, H04J 13/00

(54) **SYSTEM AND METHOD FOR RESOURCE ALLOCATION FOR SPARSE CODE MULTIPLE ACCESS TRANSMISSIONS**
SYSTEM UND VERFAHREN ZUR RESSOURCENZUWEISUNG FÜR SPARSE-CODE-MULTIPLE-ACCESS-ÜBERTRAGUNGEN
SYSTÈME ET PROCÉDÉ D'ATTRIBUTION DE RESSOURCES POUR DES ÉMISSIONS À ACCÈS MULTIPLE DE CODE PEU DENSE

(30) Priority: 31.03.2014 US 201414231217; 25.03.2015 US 201514668577
(43) Date of publication of application: 12.10.2016
(73) Proprietor: Huawei Technologies Co., Ltd., Longgang District Shenzhen, Guangdong 518129 (CN)
(72) Inventor: MA, Jianglei, Ottawa, Ontario K2M 2W5 (CA); JIA, Ming, Ottawa, Ontario K2A 0BE (CA); ZHU, Peiying, Kanata, Ontario K2M 2L4 (CA); TONG, Wen, Ottawa, Ontario K2C 4A7 (CA)
(74) Representative: Körber, Martin Hans
(86) International application number: PCT/CN2015/075434
(87) International publication number: WO 2015/149668

(56) References cited:
- EP-A2- 2 479 910
- CN-A- 102 232 319
- CN-A- 102 439 866
- CN-A- 103 262 453
- US-A1- 2014 286 284
- Hosein Nikopour Et: "Sparse Code Multiple Access", 2013 IEEE 24th International Symposium on Personal, Indoor and Mobile Radio Communications: Fundamentals and PHY Track, 8 September 2013 (2013-09-08), XP055227113, Retrieved from the Internet: URL:http://ieeexplore.ieee.org/ielx7/66561 21/6666091/06666156.pdf?tp=&arnumber=66661 56&isnumber=6666091 [retrieved on 2015-11-10]

## Description

### TECHNICAL FIELD

The present invention relates generally to sparse code multiple access (SCMA), and, in particular embodiments, to a methods, a base station and a device for SCMA signal transmissions.

### BACKGROUND

SCMA is a non-orthogonal multiple access scheme that allows multiple devices, users, or user equipments (UEs) to share channel resources. Potential transmit devices are allocated time and frequency resources, also referred to as resource units. In SCMA, potential transmit devices are also assigned a sparse codebook that allows superposition of device transmissions, which allows SCMA systems to support more connected devices.

In grant-free SCMA systems, there is no signaling from the network to devices for scheduling transmissions. The devices access the shared channel resources in a contention based manner. Contention based access begins to break down when two or more devices attempt to transmit using the same resources, which is referred to as a collision. SCMA can tolerate some amount of signal collision. SCMA systems can control the probability of collision using collision avoidance and collision detection and recovery techniques to mitigate its impact. Base station receivers generally need arriving signals to be synchronized in time in order to receive them correctly and take advantage of low complexity message passing algorithm (MPA) receivers. That synchronizing is typically achieved through signaling from the base station to the transmitting devices indicating timing adjustments to transmit timing.

EP 2 479 910 A2 and US 2014/0286284 A1 disclose related technologies regarding resource allocation. Hosein Nikopour Et: "Sparse Code Mulitple Access", 2013 IEEE 24th International Symposium on Personal, Indoor and Mobile Radio Communications: Fundamentals and PHY Track, discloses the use of SCMA.

### SUMMARY

An embodiment method of resource allocation for SCMA waveform-based signals in a base station is defined in claim 1. An embodiment base station adapted for resource allocation for SCMA waveform-based signals is defined in claim 5. An embodiment method of transmitting an SCMA signal in a device and a corresponding embodiment device are defined in claim 9 and 12, respectively.

### BRIEF DESCRIPTION OF THE DRAWINGS

For a more complete understanding of the present invention, and the advantages thereof, reference is now made to the following descriptions taken in conjunction with the accompanying drawings, in which:
Figure 1 is a diagram of an example of a wireless network;
Figure 2 is an illustration of an example of a resource block;
Figure 3 is a block diagram of one embodiment of a base station;
Figure 4 is an illustration of an SCMA encoding scheme;
Figure 5 is a flow diagram of one embodiment of a method of resource allocation for SCMA transmissions;
Figure 6 is a flow diagram of an example of a method of receiving asynchronous SCMA transmissions; and
Figure 7 is a block diagram of an example of a computing system.

### DETAILED DESCRIPTION OF ILLUSTRATIVE EMBODIMENTS

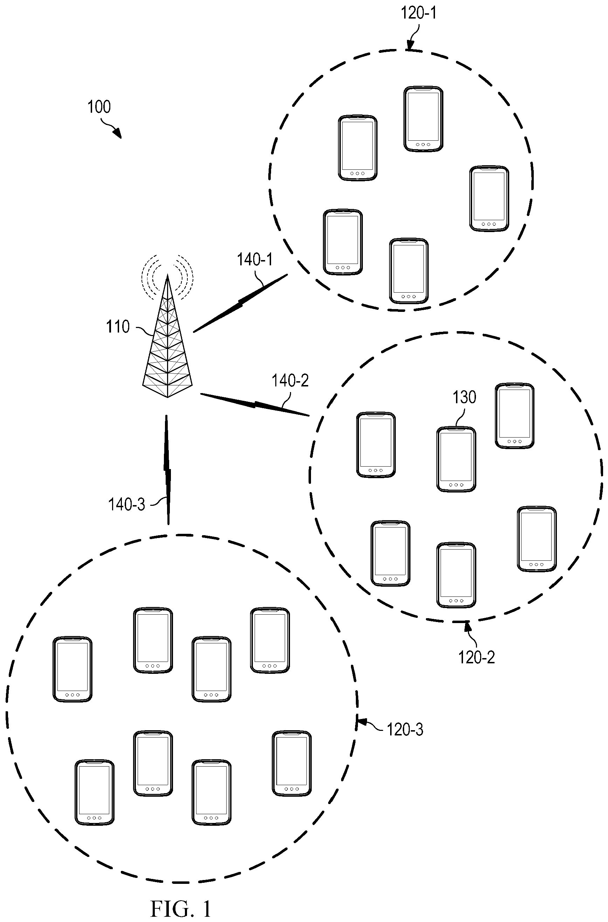

In an embodiment, SCMA encoding encodes binary data streams directly to multi-dimensional codewords rather than using a quadrature amplitude modulation (QAM) symbol, as is done in code division multiple access (CDMA). SCMA encoding provides multiple access by assigning different sparse codewords generated from sparse codebooks for each multiplexed layer, as opposed to using spreading sequences common in CDMA encoding. A multiplexed layer is one that multiple data streams may be communicated over shared resources. For example, the shared resources can be multiple-input multiple-output (MIMO) spatial layers, orthogonal frequency division multiple access (OFDMA) tones, and time division multiple access (TDMA) layers time slots, among others. Sparse codebooks include sparse codewords that allow receivers to use low complexity MPAs to detect respective codewords among the multiplexed codewords, which reduces baseband processing complexity at the receiver. It is realized herein the general requirement that SCMA signals received at a base station should be synchronized can be relaxed. Relaxing the synchronization requirement allows a certain amount of signaling overhead to be eliminated, including timing adjustment signaling from the base station to the various transmit devices. The synchronization requirements can be relaxed, it is realized herein, by taking advantage of the simplicity with which local groups of transmit devices can be synchronized. It is further realized herein that transmit devices can be grouped together according to their location and mobility. Device groups can then be allocated, or assigned, regions of the resource block reserved for SCMA transmissions. SCMA transmissions arc made over channels defined by time and frequency resources. The resource block can be partitioned into resource regions that can be individually allocated to the device groups, thereby separating asynchronous groups of devices with respect to their time and frequency resources. It is also realized herein that asynchronous SCMA transmissions in adjacent resource regions can create inter-resource region interference. To mitigate the interference, for a given device group and assigned resource region, digital filters designed for each resource region can be used to filter out side-lobes from SCMA signals originating from other transmit devices in other device groups. It is further realized herein the filtering of the SCMA signals can occur at the transmitter, e.g., UE, mobile device, etc., and at the receiver, e.g., base station, evolved node B (eNB), etc. Certain embodiments can use analog filters for each resource region, however, these embodiments are not as flexible as digital filter embodiments that can adapt to fluctuating bandwidth requirements of various device groups and their corresponding resource regions. Figure 1 is a diagram of an example of a wireless network 100. Wireless network 100 includes a base station 110 within which the method of resource allocation and method of receiving asynchronous SCMA signals introduced herein may be embodied. Base station 110 serves one or more devices by receiving uplink (UL) communications originating from the devices and forwarding the UL communications to their respective indented destinations, or by receiving communications destined for the devices and forwarding the communications to their respective intended transmit devices. Base station 110 is sometimes referred to as an access point, a Node B, an evolved Node B (eNB), a controller, a transmit device, or a communication controller. Wireless network 100 also includes three device groups 120-1, 120-2, and 120-3. Each of the three device groups contains at least one device. Devices 130 are sometimes referred to as stations, mobile stations, mobiles, mobile devices, terminals, users, UEs, transmit devices, or subscribers.

Devices 130 can be grouped into device groups 120-1, 120-2, and 120-3 according to a variety of parameters, including one or more of the following: respective device locations, respective device mobility predictions, and respective device mobility patterns. In certain embodiments, devices 130 can be grouped by wireless network 100 or, more specifically, by base station 110. In other embodiments, devices 130 can group themselves.

Devices 130 make SCMA transmissions 140-1, 140-2, and 140-3 to base station 110. SCMA transmissions 140-1, 140-2, and 140-3 are typically made using orthogonal frequency division multiple access (OFDMA) waveforms, although other waveforms are possible. SCMA transmissions 140-1 originate from devices 130 within device group 120-1. Likewise, SCMA transmissions 140-2 originate from devices 130 within device group 120-2, and SCMA transmissions 140-3 originate from devices 130 within device group 120-3. SCMA transmissions from different device groups are asynchronous. In the embodiment of Figure 1, SCMA transmissions 140-1 are asynchronous with respect to SCMA transmissions 140-2 and 140-3. SCMA transmissions 140-2 are also asynchronous with respect to SCMA transmissions 140-3. SCMA transmissions 140-1, 140-2, and 140-3 are asynchronous in that respective devices 130 in device groups 120-1, 120-2, and 120-3 have not been synchronized to one another. For example, devices 130 in device group 120-1 are not synchronized with devices 130 in device group 120-2. In certain embodiments, devices 130 within a particular device group are synchronized with each other. For example, a group of sensors located in a single building can be synchronized to a local timing reference or reference device located in the group or in the building, rather than synchronizing to base station 110. In another example, a group of users, i.e., mobile devices, riding in a bus can synchronize to a local timing reference or reference device in the group or in the bus, rather than synchronizing to base station 110. In other embodiments, devices 130 within the particular device group are in close enough proximity that no transmit-timing synchronization is needed for base station 110 to properly receive their SCMA signals.

By not synchronizing devices 130 in one device group with devices 130 in another device group, some overhead signaling from base station 110 can be eliminated. Typically, to globally, i.e., network - wide, synchronize devices 130, base station 110 would signal timing adjustments to each of devices 130, thereby synchronizing each to a common reference. For a small number of devices, the overhead cost associated with this process is manageable. However, as the number of devices grows, the overhead cost becomes significant.

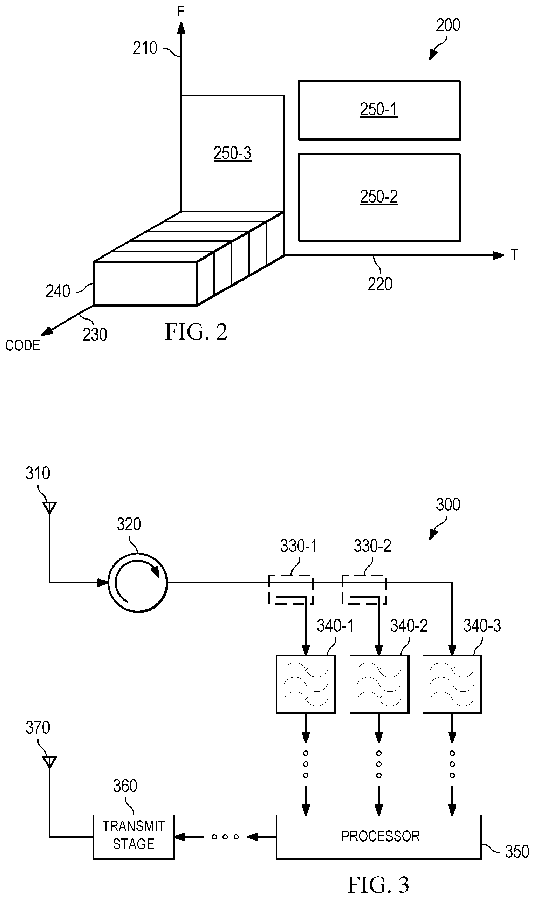

Devices 130 make their respective SCMA transmissions using a resource block defined as a block of time and frequency resources. Devices 130 are allocated at least one time/frequency resource unit and respective sparse codebooks. Figure 2 is an illustration of an example of a resource block 200. Resource block 200 is defined in three dimensions: a frequency dimension 210, a time dimensions 220, and a code dimension 230. In code dimension 230, each time/frequency resource unit is divided into unique codes 240, which are generated from corresponding sparse codebooks.

Resource block 200 is partitioned into three resource regions 250-1, 250-2, and 250-3. The resource regions are depicted as various rectangles in the time/frequency domain. Resource regions can be any shape, although defining a time band and a frequency band naturally defines a rectangle in the time/frequency domain. Resource regions can abut one another, which is to share a boundary, or can be defined with time/frequency gaps between any two resource regions. In certain examples, gaps may be needed to achieve sufficiently low levels of inter-group interference. Likewise, the entire resource block 200 need not be partitioned into various resource regions. In such examples, various portions of resource block 200 are unassigned. Resource regions are sometimes referred to as SCMA regions or multiple access regions. Partitioning resource block 200 is carried out by the network, such as wireless network 100 from Figure 1. More specifically, the partitioning can be carried out by base station 110. Each of resource regions 250-1, 250-2, and 250-3 are assigned to a respective device group, which is referred to as a resource region assignment. Resource regions are generally contiguously defined in the time/frequency domain. In the case of a non-contiguous resource region, the various pieces of the non-contiguous resource region are treated as independent resource regions assigned to a common device group. In examples having spectrum shaping filters, each non-contiguous piece of resource region would have a dedicated filter. In examples having resource regions assuming shapes other than rectangles, multiple spectrum shaping filters would be needed. For this reason, rectangular-shaped resource regions are desirable, although alternative implementations with otherwise-shaped resource regions are possible.

For the example of Figure 1, device groups 120-1, 120-2, and 120-3 can be respectively assigned, for example, to resource regions 250-1, 250-2, and 250-3. Resource region assignments are then communicated, or signaled, to the individual devices by base station 110. In certain embodiments, the resource region assignments can be communicated to the various device groups using multicast signaling. Again referring to the example of Figure 1, devices 130 then make their respective SCMA transmissions using their respective assigned resource region.

Figure 3 is a block diagram of one embodiment of a base station 300. Base station 300 includes an antenna 310, a mixer 320, couplers 330-1 and 330-2, filters 340-1, 340-2, and 340-3, and processor 350. Base station 300 also includes a transmit stage 360 and another antenna 370. Base station 300 can also include a variety of other components not illustrated in Figure 3, such as amplifiers, analog-to-digital converters, decoders, application specific integrated circuits (ASICS), field programmable gate arrays (FPGAs), dedicated logic circuitry, oscillators, and many other components. These additional components, in various embodiments of base station 300, can appear anywhere in the circuit illustrated in Figure 3, including between any two elements of base station 300.

Antenna 310 is configured to receive SCMA signals from various transmit devices. In certain embodiments, the SCMA transmissions are made using filtered OFDMA waveforms. For further information on filtered OFDMA, refer to U.S. Patent Application No. 14/231,217. The received SCMA signals are radio frequency (RF) transmissions that are down-converted by mixer 320 to baseband signals. The baseband SCMA signals are then passed through filters 340-1, 340-2, and 340-3. The received SCMA signals arrive at base station 300 on channels defined by respective allocations of time and frequency resources. These allocations are made by processor 350 according to a partitioning of a resource block into resource regions, as in, for example, resource block 200 of Figure 2, and assignment of those resource regions to respective device groups, such as device groups 120-1, 120-2, and 120-3 of Figure 1. The respective device groups contain the various transmit devices. Resource region assignments made by processor 350 are communicated to the various transmit devices through transmit stage 360 and antenna 370.

In certain embodiments, the various transmit devices are grouped into device groups by base station 300, particularly processor 350. The base station may transmit, and a UE may receive, a message indicating a plurality of UEs belonging to a device group of which the UE is a member. In other embodiments, the various transmit devices themselves form the device groups. For example, a UE may determine a composition of a device group according to respective locations of a plurality of UEs in the device group. The groupings or compositions of the device groups are communicated by message from the devices or UEs of the respective device groups to base station 300. The UE may communicate by message the devices or UEs belonging to its device group to the base station, or to at least one other UE of the UEs in the device group. The grouping of the various transmit devices can be done according to a variety of parameters, including the respective locations of the various transmit devices and respective mobility predictions and patterns for the various transmit devices. Transmit devices in one device group make SCMA transmissions that are asynchronous to SCMA transmissions made by another device group. In certain embodiments, SCMA transmissions made by two transmit devices in the same device group are synchronous. The synchronous SCMA transmissions can be synchronous as a consequence of their proximity to one another or, in certain embodiments, because transmit devices in that device group are synchronized to a common reference. Asynchronous refers to signals from different device groups arriving at different times.

Filters 340-1, 340-2, and 340-3 are each digital filters designed for a specific resource region to shape the spectrum such that inter-resource region interference is reduced, possibly eliminated. Inter-resource region interference, or inter-SCMA region interference, is caused by asynchronous SCMA transmissions by transmit devices in different device groups over adjacent resource regions. In other words, interference results from two or more asynchronous SCMA transmissions over adjacent time/frequency resources. Filters 340-1, 340-2, and 340-3 are designed to block side-lobes of OFDMA waveforms carrying asynchronous SCMA signals in adjacent resource regions. Doing so allows base station 300 to properly receive the asynchronous SCMA signals. The filtered SCMA signals are then decoded and the payload data ultimately passed to processor 350.

Processor 350 can be implemented in one or more processors, one or more ASICs, one or more FPGAs, dedicated logic circuitry, or any combination thereof, all collectively referred to as a processor. The respective functions for processor can be stored as instructions in non-transitory memory for execution by the processor.

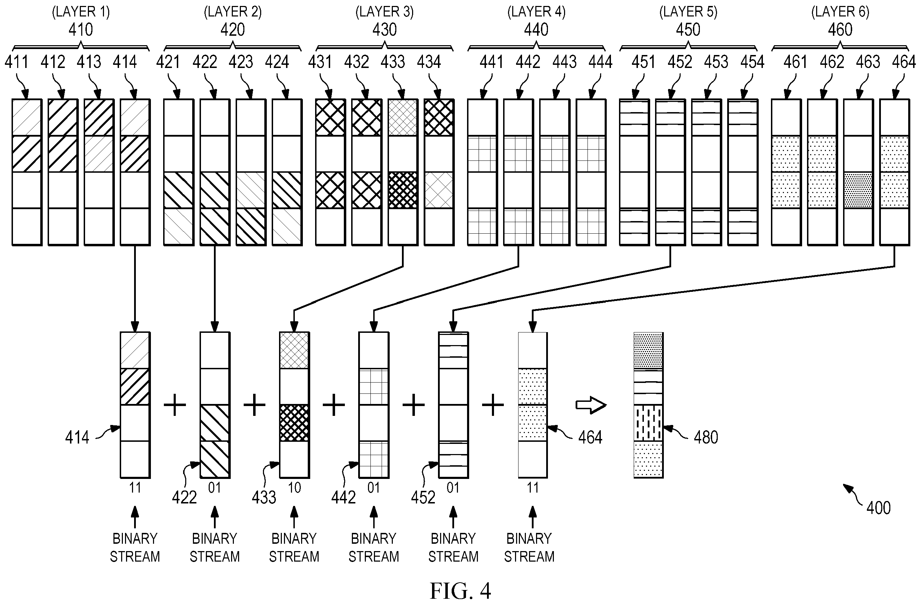

Figure 4 is an illustration of an SCMA encoding scheme 400. SCMA encoding scheme 400 uses multiple sparse codebooks 410, 420, 430, 440, 450, and 460, each of which is assigned to a different multiplexed layer and includes multiple multi-dimensional codewords. More specifically, sparse codebook 410 includes codewords 411-414, sparse codebook 420 includes codewords 421-424, sparse codebook 430 includes codewords 431-434, sparse codebook 440 includes codewords 441-444, sparse codebook 450 includes codewords 451-454, and sparse codebook 460 includes codewords 461-464. Each codeword is mapped to a different binary value. In the embodiment of Figure 4, codewords 411, 421, 431, 441, 451, and 461 are mapped to the binary value '00,' codewords 412, 422, 432, 442, 452, and 462 are mapped to the binary value '01,' codewords 413, 423, 433, 443, 453, and 463 are mapped to the binary value '10,' and codewords 414, 424, 434, 444, 454, and 464 are mapped to the binary value '11.' Although the sparse codebooks of the embodiment of Figure 4 include four codewords apiece, sparse codebooks for SCMA can include any number of codewords. For example, certain embodiment sparse codebooks may have eight codewords mapped to binary values '000' to '111,' while other embodiments may include 16 codewords mapped to binary values '0000' to '1111,' or more.

Different codewords are selected from the various sparse codebooks depending on the binary data to be transmitted over the respective multiplexed layers. In the embodiment of Figure 4, codeword 414 is selected from sparse codebook 410 because the binary value '11' is to be transmitted over the first multiplexed layer. Codeword 422 is selected from sparse codebook 420 because the binary value '01' is being transmitted over the second multiplexed layer. Codeword 433 is selected from sparse codebook 430 because the binary value '10' is to be transmitted over the third multiplexed layer. Codeword 442 is sselected from sparse codebook 440 because the binary value '01' is to be transmitted over the fourth multiplexed layer. Codeword 452 is selected from sparse codebook 450 because the binary value '01' is to be transmitted over the fifth multiplexed layer. Codeword 464 is selected from sparse codebook 460 because the binary value '11' is to be transmitted over the sixth multiplexed layer. Codewords, 414, 422, 433, 442, 452, and 464 are then multiplexted together to form a multiplexed data stream 480, which is transmitted over shared resources. Codewords 414, 422, 433, 442, 452, and 464 are sparse codewords that can be identified upon receipt of multiplexed data stream 480 at the receiver using an MPA.

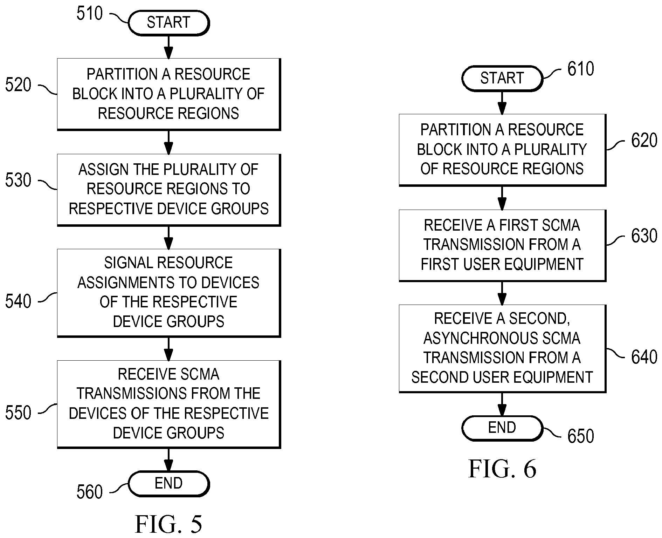

Figure 5 is flow diagram of one embodiment of a method of resource allocation for SCMA signals. The method begins at a start step 510. At a partitioning step 520, a base station partitions a resource block into a plurality of resource regions. The resource block is defined as a block of time, frequency, and codebook resources. At an assigning step 530, the resource regions are assigned to respective device groups. Transmit devices are grouped into the device groups according to their respective locations. In certain embodiments, the transmit devices are grouped into the device groups according to respective mobility predictions and patterns for the transmit devices.

The resource region assignments are signaled to the transmit devices at a communicating step 540. The resource region assignments need not be communicated to the transmit devices for every data transmission. The transmit devices make their respective SCMA transmissions using their respective assigned resource regions. The SCMA signals are received at by the base station at a receiving step 550. The SCMA transmissions are asynchronous from device group to device group. In certain embodiments, the method also includes filtering the SCMA signals using, e.g., spectrum shaping filters corresponding to the respective resource regions, in order to filter out inter-resource region interference caused by the asynchronous transmissions. The filtering allows the base station receivers to properly receive, decode, and detect the SCMA signals. The method ends at an end step 560.

Figure 6 is a flow diagram of an example of a method of receiving asynchronous SCMA signals. The method begins at a start step 610. At a base station, at a partitioning step 620, a resource block is partitioned into a plurality of resource regions. The resource regions are assigned to respective device groups. The device groups each contain at least one transmit device, i.e., UE. In certain examples, the UEs are grouped into the device groups according to their respective locations. In some examples the UEs are grouped according to respective mobility predictions and patterns for the UEs. The grouping can be carried out, in certain examples, by the base station while, in other examples, the grouping is carried out by the UEs themselves.

The device groups of UEs are assigned to the resource regions and the assignments are communicated to the UEs. The device groups can contain any number of UEs. UEs within a given device group transmit using resource region assigned to the device group. At a first receiving step 630, a first SCMA signal is received at the base station from a first UE. The first UE makes the first SCMA transmission using a first resource region of the plurality of resource regions. In certain embodiments, multiple sparse codewords, or layers, can be superposed on the first resource region. At a second receiving step 640, a second SCMA signal is received at the base station from a second UE. The second UE makes the second SCMA transmission using a second resource region of the plurality of resource regions. Because the first UE and the second UE are in different device groups and assigned different resource regions, the first SCMA transmission and the second SCMA transmission are asynchronous. The first UE and second UE have not been synchronized to a common reference. In certain embodiments, for the base station to properly receive the SCMA signals, the first SCMA signal and the second SCMA signal are passed through filters designed for their respective resource regions. Each filter, designed for a specific resource region, is configured to filter out the interference caused by asynchronous SCMA transmissions from neighboring resource regions. The method ends at an end step 650.

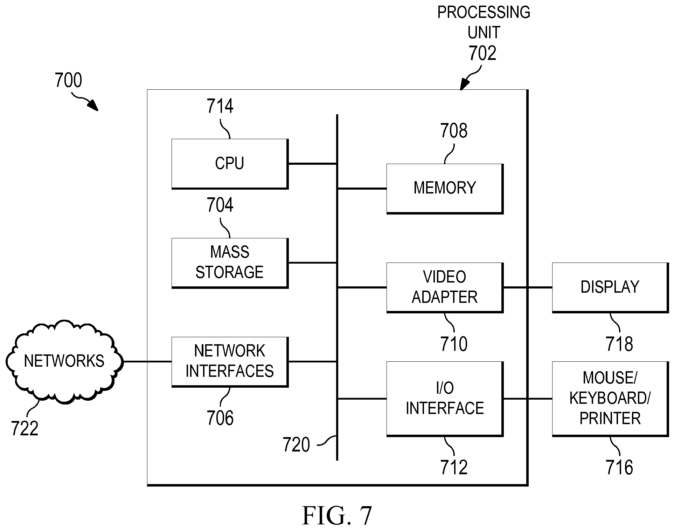

Figure 7 is a block diagram of a computing system 700 that may be used for implementing the devices and methods disclosed herein. Specific devices may utilize all of the components shown or only a subset of the components, and levels of integration may vary from device to device.

Furthermore, a device may contain multiple instances of a component, such as multiple processing units, processors, memories, transmitters, receivers, etc. The computing system 700 may comprise a processing unit 702 equipped with one or more input/output devices, such as a speaker, microphone, mouse, touchscreen, keypad, keyboard, printer, display, and the like. The processing unit may include a central processing unit (CPU) 714, memory 708, a mass storage device 704, a video adapter 710, and an I/O interface 712 connected to a bus 720.

The bus 720 may be one or more of any type of several bus architectures including a memory bus or memory controller, a peripheral bus, video bus, or the like. The CPU 714 may comprise any type of electronic data processor. The memory 708 may comprise any type of non-transitory system memory such as static random access memory (SRAM), dynamic random access memory (DRAM), synchronous DRAM (SDRAM), read-only memory (ROM), a combination thereof, or the like. In an embodiment, the memory 708 may include ROM for use at boot-up, and DRAM for program and data storage for use while executing programs.

The mass storage 704 may comprise any type of non-transitory storage device configured to store data, programs, and other information and to make the data, programs, and other information accessible via the bus 720. The mass storage 704 may comprise, for example, one or more of a solid state drive, hard disk drive, a magnetic disk drive, an optical disk drive, or the like.

The video adapter 710 and the I/O interface 712 provide interfaces to couple external input and output devices to the processing unit 702. As illustrated, examples of input and output devices include a display 718 coupled to the video adapter 710 and a mouse/keyboard/printer 716 coupled to the I/O interface 712. Other devices may be coupled to the processing unit 702, and additional or fewer interface cards may be utilized. For example, a serial interface such as Universal Serial Bus (USB) (not shown) may be used to provide an interface for a printer.

The processing unit 702 also includes one or more network interfaces 706, which may comprise wired links, such as an Ethernet cable or the like, and/or wireless links to access nodes or different networks. The network interfaces 706 allow the processing unit 702 to communicate with remote units via the networks. For example, the network interfaces 706 may provide wireless communication via one or more transmitters/transmit antennas and one or more receivers/receive antennas. In an embodiment, the processing unit 702 is coupled to a local-area network 722 or a wide-area network for data processing and communications with remote devices, such as other processing units, the Internet, remote storage facilities, or the like.

In accordance with one embodiment of the invention, a base station is also disclosed. The base station includes a processor, a transmitter, and a receiver. The processor is configured to partition a resource block into a plurality of resource regions and assign the plurality of resource regions to respective device groups. The transmitter is operatively coupled to the processor and is configured to signal resource region assignments to devices of the respective device groups. The receiver is operatively coupled to the processor and is configured to receive sparse code multiple access (SCMA) signals from the devices of the respective device groups. In the embodiment, the SCMA signals from one group of the respective device groups are asynchronous with respect to the SCMA signals from another group of the respective device groups.

In accordance with another example of the invention, a UE is disclosed. The UE includes a receiver to configured to receive a resource region assignment indicating a resource region allocated to a device group of which the UE is a member; filter a sparse code multiple access (SCMA) signal using a spectrum shaping filter corresponding to the resource region; and transmit the filtered SCMA signal toward a base station using time and frequency resources of the resource region according to the resource region assignment. In the embodiment, the transmitting is carried out synchronously with a local timing reference for the device group.

## Claims

1. A method of resource allocation for sparse code multiple access, SCMA, signals in a base station, comprising:
signaling (540) resource region assignments to devices of respective device groups, wherein the resource region assignments assign a plurality of resource regions of a resource block to the respective device groups; and
receiving (550) the SCMA signals from the devices of the respective device groups, wherein the SCMA waveform-based signals from one group of the respective device groups are asynchronous with respect to the SCMA waveform-based signals from another group of the respective device groups, and wherein the devices of the one group of the respective device groups are synchronized with other devices of the one group.

2. The method of Claim 1 further comprising filtering received SCMA waveform-based signals, wherein the filtering is carried out by respective spectrum shaping filters for the plurality of resource regions.

3. The method of Claim 1 further comprising transmitting a message to the devices indicating a grouping of the devices into the respective device groups according to respective locations of the devices or respective mobility predictions for the devices.

4. The method of Claim 1, further comprising receiving a message from a device of the respective device groups indicating a grouping of the devices into respective device groups.

5. Base station (110, 300) adapted for resource allocation for sparse code multiple access, SCMA, signals, comprising:
a transmitter (360) adapted to signal resource region assignments to devices of the respective device groups, wherein the resource region assignments assign a plurality of resource regions of a resource block to the respective device groups; and
a receiver adapted to receive the SCMA waveform-based signals from the devices of the respective device groups, wherein the SCMA waveform-based signals from one group of the respective device groups are asynchronous with respect to the SCMA waveform-based signals from another group of the respective device groups, and wherein the devices of the one group of the respective device groups are synchronized with other devices of the one group.

6. The base station of Claim 5, further comprising respective spectrum shaping filters adapted to filter received SCMA waveform-based signals from the devices of the respective device groups for the plurality of resource regions.

7. The base station of Claim 5, wherein the transmitter is adapted to transmit a message to the devices indicating a grouping of the devices into the respective device groups according to respective locations of the devices or respective mobility predictions for the devices.

8. The base station of Claim 5, wherein the receiver is further adapted to receive a message from a device of the respective device groups indicating a grouping of the devices into respective device groups.

9. A method of transmitting a sparse code multiple access, SCMA, signal in a device, comprising:
receiving, from a base station, a resource region assignment indicating a resource region of a resource block assigned to a device group of which the device is a member;
and
transmitting an SCMA waveform-based signal to the base station using time and frequency resources of the resource region assigned according to the resource region assignment, wherein the devices of the device group of which the device is a member are synchronized with other devices in said device group and the transmitting is carried out synchronously with a local timing reference for the device group.

10. The method of Claim 9, further comprising:
determining a composition of the device group according to respective locations of a plurality of devices in the device group; and
communicating the composition of the device group to the base station.

11. The method of Claim 9, further comprising receiving, from the base station, a message indicating a plurality of devices belonging to the device group from the base station.

12. A device adapted to transmit a sparse code multiple access, SCMA, signal, comprising a processing unit configured to
receive, from a base station, a resource region assignment indicating a resource region of a resource block assigned to a device group of which the device is a member;
and
transmit an SCMA waveform-based signal to the base station using time and frequency resources of the resource region assigned according to the resource region assignment, wherein the devices of the device group of which the device is a member are synchronized with other devices in said device group and the transmitting is carried out synchronously with a local timing reference for the device group.

13. The device of Claim 12, wherein the processing unit is further configured to
determine a composition of the device group according to respective locations of a plurality of devices in the device group; and
communicate the composition of the device group to the base station.

14. The device of Claim 12, wherein the processing unit is further configured to receive, from the base station, a message indicating a plurality of devices belonging to the device group from the base station.

## Patentansprüche

1. Verfahren zur Ressourcenzuweisung für "Sparse Code Multiple Access"-bzw. SCMA-Signale in einer Basisstation, umfassend:
Signalisieren (540) von Ressourcenbereichszuteilungen zu Vorrichtungen jeweiliger Vorrichtungsgruppen, wobei die Ressourcenbereichszuteilungen mehrere Ressourcenbereiche eines Ressourcenblocks den jeweiligen Vorrichtungsgruppen zuteilen; und
Empfangen (550) der SCMA-Signale von den Vorrichtungen der jeweiligen Vorrichtungsgruppen, wobei die wellenformbasierten SCMA-Signale von einer Gruppe der jeweiligen Vorrichtungsgruppen asynchron in Bezug auf die wellenformbasierten SCMA-Signale von einer anderen Gruppe der jeweiligen Vorrichtungsgruppen sind, und wobei die Vorrichtungen der einen Gruppe der jeweiligen Vorrichtungsgruppen synchronisiert mit anderen Vorrichtungen der einen Gruppe sind.

2. Verfahren nach Anspruch 1, welches ferner das Filtern empfangener wellenformbasierter SCMA-Signale umfasst, wobei das Filtern von jeweiligen spektrumformenden Filtern für die mehreren Ressourcenbereiche ausgeführt wird.

3. Verfahren nach Anspruch 1, welches ferner das Senden einer Nachricht an die Vorrichtungen umfasst, welche eine Gruppierung der Vorrichtungen in die jeweiligen Vorrichtungsgruppen gemäß jeweiligen Orten der Vorrichtungen oder jeweiligen Mobilitätsvorhersagen für die Vorrichtungen angibt.

4. Verfahren nach Anspruch 1, welches ferner das Empfangen einer Nachricht von einer Vorrichtung der jeweiligen Vorrichtungsgruppen umfasst, welche eine Gruppierung der Vorrichtungen in jeweilige Vorrichtungsgruppen angibt.

5. Basisstation (110, 300), welche für eine Ressourcenzuweisung für "Sparse Code Multiple Access"-bzw. SCMA-Signale ausgelegt ist, umfassend:
einen Sender (360), der dafür ausgelegt ist, Ressourcenbereichszuteilungen zu Vorrichtungen der jeweiligen Vorrichtungsgruppen zu signalisieren, wobei die Ressourcenbereichszuteilungen mehrere Ressourcenbereiche eines Ressourcenblocks den jeweiligen Vorrichtungsgruppen zuteilen; und
einen Empfänger, der dafür ausgelegt ist, die wellenformbasierten SCMA-Signale von den Vorrichtungen der jeweiligen Vorrichtungsgruppen zu empfangen, wobei die wellenformbasierten SCMA-Signale von einer Gruppe der jeweiligen Vorrichtungsgruppen asynchron in Bezug auf die wellenformbasierten SCMA-Signale von einer anderen Gruppe der jeweiligen Vorrichtungsgruppen sind, und wobei die Vorrichtungen der einen Gruppe der jeweiligen Vorrichtungsgruppen synchronisiert mit anderen Vorrichtungen der einen Gruppe sind.

6. Basisstation nach Anspruch 5, welche ferner jeweilige spektrumformende Filter umfasst, die dafür ausgelegt sind, empfangene wellenformbasierte SCMA-Signale von den Vorrichtungen der jeweiligen Vorrichtungsgruppen für die mehreren Ressourcenbereiche zu filtern.

7. Basisstation nach Anspruch 5, wobei der Sender dafür ausgelegt ist, eine Nachricht an die Vorrichtungen zu senden, welche eine Gruppierung der Vorrichtungen in die jeweiligen Vorrichtungsgruppen gemäß jeweiligen Orten der Vorrichtungen oder jeweiligen Mobilitätsvorhersagen für die Vorrichtungen angibt.

8. Basisstation nach Anspruch 5, wobei der Empfänger ferner dafür ausgelegt ist, eine Nachricht von einer Vorrichtung der jeweiligen Vorrichtungsgruppen zu empfangen, welche eine Gruppierung der Vorrichtungen in jeweilige Vorrichtungsgruppen angibt.

9. Verfahren zum Senden eines "Sparse Code Multiple Access"-bzw. SCMA-Signals in einer Vorrichtung, umfassend:
Empfangen, von einer Basisstation, einer Ressourcenbereichszuteilung, die einen Ressourcenbereich eines Ressourcenblocks angibt, der einer Vorrichtungsgruppe zugeteilt ist, welcher die Vorrichtung angehört;
und
Senden eines wellenformbasierten SCMA-Signals an die Basisstation unter Verwendung von Zeit- und Frequenzressourcen des gemäß der Ressourcenbereichszuteilung zugeteilten Ressourcenbereichs, wobei die Vorrichtungen der Vorrichtungsgruppe, welcher die Vorrichtung angehört, mit anderen Vorrichtungen in dieser Vorrichtungsgruppe synchronisiert sind und das Senden synchron mit einer lokalen Zeitreferenz für die Vorrichtungsgruppe durchgeführt wird.

10. Verfahren nach Anspruch 9, ferner umfassend:
Bestimmen einer Zusammensetzung der Vorrichtungsgruppe gemäß den jeweiligen Orten mehrerer Vorrichtungen in der Vorrichtungsgruppe; und
Übermitteln der Zusammensetzung der Vorrichtungsgruppe an die Basisstation.

11. Verfahren nach Anspruch 9, welches ferner das Empfangen, von der Basisstation, einer Nachricht umfasst, die mehrere Vorrichtungen angibt, die der Vorrichtungsgruppe von der Basisstation angehören.

12. Vorrichtung, welche dafür ausgelegt ist, ein "Sparse Code Multiple Access"-bzw.
SCMA-Signal zu senden, und eine Verarbeitungseinheit umfasst, die dafür konfiguriert ist,
von einer Basisstation eine Ressourcenbereichszuteilung zu empfangen, die einen Ressourcenbereich eines Ressourcenblocks angibt, der einer Vorrichtungsgruppe zugeteilt ist, welcher die Vorrichtung angehört;
und
ein wellenformbasiertes SCMA-Signal an die Basisstation unter Verwendung von Zeit- und Frequenzressourcen des gemäß der Ressourcenbereichszuteilung zugeteilten Ressourcenbereichs zu senden, wobei die Vorrichtungen der Vorrichtungsgruppe, welcher die Vorrichtung angehört, mit anderen Vorrichtungen in dieser Vorrichtungsgruppe synchronisiert sind und das Senden synchron mit einer lokalen Zeitreferenz für die Vorrichtungsgruppe durchgeführt wird.

13. Vorrichtung nach Anspruch 12, wobei die Verarbeitungseinheit ferner dafür konfiguriert ist,
eine Zusammensetzung der Vorrichtungsgruppe gemäß den jeweiligen Orten mehrerer Vorrichtungen in der Vorrichtungsgruppe zu bestimmen; und
die Zusammensetzung der Vorrichtungsgruppe an die Basisstation zu übermitteln.

14. Vorrichtung nach Anspruch 12, wobei die Verarbeitungseinheit ferner dafür konfiguriert ist, von der Basisstation eine Nachricht zu empfangen, die mehrere Vorrichtungen angibt, die der Vorrichtungsgruppe von der Basisstation angehören.

## Revendications

1. Procédé d'attribution de ressources pour des signaux à accès multiple de code peu dense, SCMA, dans une station de base, comprenant :
la signalisation (540) d'affectations de régions de ressources à des dispositifs parmi les groupes de dispositifs respectifs, les affectations de régions de ressources affectant une pluralité de régions de ressources d'un bloc de ressources aux groupes de dispositifs respectifs ; et
la réception (550) des signaux SCMA provenant des dispositifs des groupes de dispositifs respectifs, les signaux basés sur une forme d'onde SCMA provenant d'un groupe parmi les groupes de dispositifs respectifs étant asynchrones par rapport aux signaux basés sur une forme d'onde SCMA provenant d'un autre groupe parmi les groupes de dispositifs respectifs, et les dispositifs dudit groupe parmi les groupes de dispositifs respectifs étant synchronisés avec d'autres dispositifs dudit groupe.

2. Procédé selon la revendication 1, comprenant en outre le filtrage des signaux basés sur une forme d'onde SCMA reçus, le filtrage étant effectué par des filtres de mise en forme de spectre respectifs pour la pluralité de régions de ressources.

3. Procédé selon la revendication 1, comprenant en outre l'émission d'un message aux dispositifs indiquant un groupement des dispositifs dans les groupes de dispositifs respectifs en fonction des localisations respectives des dispositifs ou des prédictions de mobilité respectives pour les dispositifs.

4. Procédé selon la revendication 1, comprenant en outre la réception d'un message provenant d'un dispositif parmi les groupes de dispositifs respectifs indiquant un groupement des dispositifs dans des groupes de dispositifs respectifs.

5. Station de base (110, 300) adaptée pour une attribution de ressources pour des signaux à accès multiple de code peu dense, SCMA, comprenant :
un émetteur (360) adapté pour signaler des affectations de régions de ressources à des dispositifs parmi les groupes de dispositifs respectifs, les affectations de régions de ressources affectant une pluralité de régions de ressources d'un bloc de ressources aux groupes de dispositifs respectifs ; et
un récepteur adapté pour recevoir les signaux basés sur une forme d'onde SCMA provenant des dispositifs parmi les groupes de dispositifs respectifs, les signaux basés sur une forme d'onde SCMA provenant d'un groupe parmi les groupes de dispositifs réceptifs étant asynchrones par rapport aux signaux basés sur une forme d'onde SCMA provenant d'un autre groupe parmi les groupes de dispositifs respectifs, et les dispositifs dudit groupe parmi les groupes de dispositifs respectifs étant synchronisés avec d'autres dispositifs dudit groupe.

6. Station de base selon la revendication 5, comprenant en outre des filtres de mise en forme de spectre respectifs adaptés pour filtrer des signaux basés sur une forme d'onde SCMA reçus provenant des dispositifs parmi les groupes de dispositifs respectifs pour la pluralité de régions de ressources.

7. Station de base selon la revendication 5, dans lequel l'émetteur est adapté pour émettre un message aux dispositifs indiquant un groupement des dispositifs dans les groupes de dispositifs respectifs en fonction des localisations respectives des dispositifs ou des prédictions de mobilité respectives pour les dispositifs.

8. Station de base selon la revendication 5, dans lequel le récepteur est adapté en outre pour recevoir un message provenant d'un dispositif parmi les groupes de dispositifs respectifs indiquant un groupement des dispositifs dans des groupes de dispositifs respectifs.

9. Procédé d'émission d'un signal à accès multiple de code peu dense, SCMA, dans un dispositif, comprenant :
la réception, à partir d'une station de base, d'une affectation de régions de ressources indiquant une région de ressources d'un bloc de ressources affectée à un groupe de dispositifs dont le dispositif est membre ;
et
l'émission d'un signal basé sur une forme d'onde SCMA à la station de base à l'aide de ressources de fréquence et de temps de la région de ressources affectée en fonction de l'affectation de régions de ressources, les dispositifs parmi le groupe de dispositifs dont le dispositif est membre étant synchronisés avec d'autres dispositifs dans ledit groupe de dispositifs et l'émission étant effectuée de manière synchrone avec une référence de synchronisation locale pour le groupe de dispositifs.

10. Procédé selon la revendication 9, comprenant en outre :
la détermination d'une composition du groupe de dispositifs en fonction des localisations respectives d'une pluralité de dispositifs dans le groupe de dispositifs ;
et
la communication de la composition du groupe de dispositifs à la station de base.

11. Procédé selon la revendication 9, comprenant en outre la réception, à partir de la station de base, d'un message indiquant une pluralité de dispositifs appartenant au groupe de dispositifs provenant de la station de base.

12. Dispositif adapté pour émettre un signal à accès multiple de code peu dense, SCMA, comprenant une unité de traitement conçue pour :
recevoir, à partir d'une station de base, une affectation de régions de ressources indiquant une région de ressources d'un bloc de ressources affectée à un groupe de dispositifs dont le dispositif est membre ;
et
émettre un signal basé sur une forme d'onde SCMA à la station de base à l'aide de ressources de fréquence et de temps de la région de ressources affectée en fonction de l'affectation de régions de ressources, les dispositifs parmi le groupe de dispositifs dont le dispositif est membre étant synchronisés avec d'autres dispositifs dans ledit groupe de dispositifs et l'émission étant effectuée de manière synchrone avec une référence de synchronisation locale pour le groupe de dispositifs.

13. Dispositif selon la revendication 12, dans lequel l'unité de traitement est conçue en outre pour déterminer une composition du groupe de dispositifs en fonction des localisations respectives d'une pluralité de dispositifs dans le groupe de dispositifs ;
et
communiquer la composition du groupe de dispositifs à la station de base.

14. Dispositif selon la revendication 12, dans lequel l'unité de traitement est conçue en outre pour recevoir, à partir de la station de base, un message indiquant une pluralité de dispositifs appartenant au groupe de dispositifs provenant de la station de base.
